# EUROPÄISCHE PATENTSCHRIFT

(11) **EP 2 217 478 B1**
(45) Veröffentlichungstag und Bekanntmachung des Hinweises auf die Patenterteilung: **04.01.2012**
(21) Anmeldenummer: 07819692.0
(22) Anmeldetag: 08.11.2007
(51) Int. Cl.: B60T 8/32, B60T 13/12, B60T 13/74

(54) **BREMSANLAGE MIT EINER DURCH BREMSPEDAL SCHALTBAREN KUPPLUNG ZUR ABKOPPLUNG DER ANTRIEBSEINRICHTUNG VON DER KOLBEN-ZYLINDER-EINHEIT**
BRAKE SYSTEM COMPRISING A CLUTCH SHIFTABLE BY THE BRAKE PEDAL FOR DISENGAGING THE DRIVE DEVICE FROM THE PISTON-CYLINDER UNIT
INSTALLATION DE FREIN DOTÉS D'UN ACCOUPLEMENT COMMUTÉ PAR LA PÉDALE DE FREIN POUR DÉCOUPLER LE DISPOSITIF D'ENTRAÎNEMENT DE L'UNITÉ À CYLINDRE ET PISTON

(43) Veröffentlichungstag der Anmeldung: 18.08.2010
(73) Patentinhaber: IPGATE AG, 8808 Pfäffikon SZ (CH)
(72) Erfinder: UNTERFRAUNER, Valentin, I-39040 Feldthurns (IT); LEIBER, Heinz, 71739 Oberriexingen (DE)
(74) Vertreter: Lenzing, Andreas
(86) Internationale Anmeldenummer: PCT/EP2007/009683
(87) Internationale Veröffentlichungsnummer: WO 2009/059619

(56) Entgegenhaltungen:
- WO-A-2004/005095
- WO-A-2004/110840
- DE-A1- 3 031 643
- DE-A1-102004 050 103
- FR-A- 2 860 474
- US-A- 4 395 883

## Beschreibung

Die vorliegende Erfindung betrifft eine Bremsanlage mit mindestens einer Kolben-Zylinder-Einheit zur Erzeugung eines Drucks in mindestens einem Arbeitsraum, wobei der Arbeitsraum über mindestens eine Hydraulikleitung mit mindestens einer Radbremse in Verbindung ist, und dass die Bremsanlage zudem mindestens eine Antriebseinrichtung und eine Betätigungseinrichtung, insbesondere in Form eines Bremspedals aufweist, und die Antriebseinrichtung im Normalbetrieb auf den mindestens einen ersten Kolben der Kolben-Zylinder-Einheit zum Druckaufbau und Druckabbau mit einem ersten Kraftübertragungsmittel wirkt und im Störungsfall die Betätigungseinrichtung mechanisch über ein zweites Kraftübertragungsmittel auf den Kolben wirkt.

### Stand der Technik

Bei Bremssystemen besteht der Trend, den Vakuum-Bremskraftverstärker (V-BKV) durch einen hydraulischen oder elektromotorischen Bremskraftverstärker (BKV) zu ersetzen. Eine Ausführung des elektromotorischen BKVs ist in der DE 10 2004 050 103 A1 beschrieben. Die Druckmodulation erfolgt hierbei in einem getrennten Block. Die elektromotorische Verstärkung erfolgt über einen Kraftsensor, welcher über den Elektromotor mit Spindelantrieb zum Kolben die gewünschte Verstärkung bewirkt. Die Spindel wirkt auf den Mitnehmer zum Druckaufbau, wobei zwischen Spindel und Mitnehmer Dämpfungselemente eingebaut sind. Die Rückstellung des Mitnehmers erfolgt über die Druckkräfte des Hauptbremszylinders und dessen nicht gezeichnete Rückstellfeder. Bei Ausfall des Motorantriebes wirkt das Bremspedal über den Mitnehmer direkt auf den Kolben.

In der DE 10 2005 018 649 ist ebenfalls ein elektromotorischer Bremskraftverstärker beschrieben, welcher durch entsprechende Kolbensteuerung mit Magnetventilen neben der Bremskraftverstärkung auch die Druckmodulation für ABS/ESP erledigt. Hierbei ist der HZ-Kolben direkt mit dem Motorantrieb verbunden. Dies ist notwendig zum schnellen Druckabbau bei kleinen Drücken, da hier die rückstellende Kraft durch Bremsdruck und Federn zu gering ist. Für den Ausfall des Motors ist eine spezielle Kupplung für die Spindelmutter vorgesehen, welche diese im Fall des Motorausfalls freigibt, so dass die Pedalkraft über entsprechende Übertragungsglieder direkt auf die HZ-Kolben einwirken kann. Diese Lösung ist aufwandig und erfordert viel Bauraum.

In der nachveröffentlichten DE 10 2006 050 277 sind ebenfalls für einen elektromotorischen Bremskraftverstärker Stufen- oder Ringkolben vorgesehen. Der äußere Kolben ist direkt mit dem Spindelantrieb verbunden und bewirkt zusammen mit dem Motor die Bremskraft-verstärkung und die Druckmodulation. Bei dieser Lösung ist bei Ausfall des Motorantriebes der innere Kolben mit den Übertragungselementen ebenfalls mit dem Bremspedal verbunden, so dass in diesem Fall eine ausreichende Bremswirkung erzielt werden kann. Problematisch bei dieser Lösung ist die Kolbenabdichtung, insbesondere bei kleinen Kolbendurchmessern, welche gerade für dieses System bevorzugt werden. Außerdem ist der kleinere Kolben wegen der kleineren Volumenverdrängung im Vergleich zum größeren sogenannten Schwimmkolben ungünstig, da er bei hohen Bremsdrücken auf den kleinen Kolben trifft und die Bremsdruck sich voneinander unterscheiden.

WO 2004/11840 offenbart einen elektromechanischen Bremsverstärker, bei dem ein elektrischer Motor einen Spindeltrieb antreibt, welcher eine drehfest gelagerte Spindelschraube axial antreibt, welche über einen Mitnehmer einen Kolben eines Hauptbremszylinders zum Druckaufbau verstellt. Der Mitnehmer ist mit der Spindelschraube nicht fest verbunden, so dass im Störungsfall über das Bremspedal der Kolben zum Druckaufbau verstellt werden kann.

Technisch sehr ahnlich aufgebaute Bremskraftverstärker sind zudem aus WO 2004/005095 und FR 2860 474 vorbekannt.

### Aufgabe der Erfindung

Es ist Aufgabe der vorliegenden Erfindung, eine Bremsanlage bereitzustellen, bei der bei einer Störung der Antriebseinheit ein Druck in dem Bremszylinder mittels einer Betätigungseinrichtung, insbesondere in Form des Bremspedals, unabhängig von der Antriebseinheit aufbaubar ist.

### Lösung der Aufgabe

Diese Aufgabe wird erfindungsgemäß mit einer Bremsanlage mit den Merkmalen des Anspruchs 1 sowie den Merkmalen der Unteransprüche gelöst.

Der Erfindung liegt der Gedanke zugrunde, ein erstes und ein zweites Kraftübertragungsmittel vorzusehen. Das erste Kraftübertragungsmittel ist dabei von der Antriebseinrichtung angetrieben, und insbesondere bei einem elektromotorischen Antrieb als Spindel ausgebildet, Das zweite Kraftübertragungsmittel wird im Störungsfall von der Betätigungseinrichtung, insbesondere in Form des Bremspedals bewegt und verstellt dann den Kolben, wobei gleichzeitig eine Entkopplung des im Normalbetrieb zwischen dem ersten Kraftübertragungsmittel und dem Kolben bestehenden Formschlusses durch das zweite Kraftübertragungsmittel erfolgt. Im Normalbetrieb, in dem der Kolben von der Antriebseinrichtung zum Druckauf- sowie zum Druckabbau verstellt wird, wird erfindungsgemäß der Formschluss zwischen Kolben und erstem Kraftübertragungsmittel durch das zweite Kraftübertragungsmittel gesichert, welches von der Antriebseinrichtung mit dem Kolben zusammen verstellt wird. Sofern der Antrieb gestört ist und eine Bremswirkung benötigt wird, kann durch das Bremspedal über eine Kraft auf das zweite Kraftübertragungsmittel ausgeübt werden, wodurch dieses relativ zum Kolben und dem ersten Kraftübertragungsmittel in Richtung Kolben gegen eine Federkraft verstellt wird. Durch diese Relativbewegung wird die Sicherung des Formschlusses aufgehoben. Der Formschluss wird somit ausgekuppelt und der Kolben kann über das zweite Kraftübertragungsmittel frei von der Antriebseinrichtung zum Druckaufbau verstellt werden.

Damit die Kupplung im Normalbetrieb eingekuppelt bleibt, d.h, der Formschluss gesichert ist, drückt eine Feder das zweite Kraftübertragungsmittel in eine erste einkuppelnde Stellung. In dieser Stellung bzw. Relativlage der Kolben und der beiden Kraftübertragungsmittel zueinander wird das Kupplungselement sicher in seiner den Formschluss herstellenden Position gehalten.

Vorteilhaft ist es, wenn die vorbeschriebene Kupplung in räumlicher Nähe zum Kolben angeordnet ist. Besonders vorteilhaft ist es, wenn das erste und zweite Kraftübertragungsmittel mit ihren Enden in einer, insbesondere topfförmigen, Aussparung des Kolben, welche dem Arbeitsraum der Kolben-Zylinder-Einheit abgewandt ist, einliegen. Dabei ist mindestens ein Kupplungselement radial zur Zylinderachse verschieblich am Kolben oder einem daran befestigten Teil, insbesondere einer Hülse, gelagert, Je nach Stellung der beiden Kraftübertragungsmittel zueinander und zum Kolben, wird das Kupplungselement derart verstellt, dass es entweder den Formschluss zwischen Kolben und erstem Kraftübertragungsmittel herstellt oder den Kolben vom zweiten Kraftübertragungsmittel und somit vom Antrieb entkoppelt.

Das erste Kraftübertragungsmittel umgreift dabei mit seiner topfförmig ausgebildeten Stirnseite die Hülse, in der das mindestens eine Kupplungselement gelagert ist, und welche ihrerseits ein Teil des Kolbens oder an diesem befestigt ist. Innerhalb der Hülse liegt das freie Ende des zweiten Kraftübertragungsmittels ein. Ebenfalls in der Hülse ist eine Rückstellfeder angeordnet, die das zweite Kraftübertragungsmittel in die erste den Formschluss sichernde Stellung druckbeaufschlagt. In radialen Fenstern der Hülse liegt mindestens ein Kupplungselement radial verschieblich gelagert ein, welches durch Führungskurven der beiden Kraftübertragungsmittel in eine Aussparung des jeweils anderen Kraftübertragungsmittel bewegbar ist. Vorteilhaft werden hierbei Wälzkörper oder Kugeln als Kupplungselemente zur Reibungsminimierung eingesetzt. Das zweite Kraftübertragungsmittel liegt in dem ersten Kraftübertragungsmittel verschieblich ein.

Die Aussparungen der beiden Kraftübertragungsmittel sind im einfachsten Fall Ringnuten, wobei die Flanken der Nuten als Führungskurven ausgebildet sind, so dass bei einer Relativbewegung das mindestens eine Kupplungselement radial verstellt wird.

Die Verwendung von Wälzkörpern ist sehr sicher, kostengünstig und kleinbauend. Als Bestandteil des Druckstangenkolben (DK) und damit des Hauptbremszylinders kann dieser leicht getauscht werden ohne dass die gesamte Einheit ausgebaut werden muss. Zudem kann die Funktion der Kupplung im Service durch Vergleich des Pedalweggebers und Druckgeber bei ein- und ausgeschaltetem Motor einfach diagnostiziert werden.

In einer bevorzugten Ausführungsform der erfindungsgemäßen Bremsanlage ist das erste und/oder das zweite Kraftübertragungsmittel verschieblich und/oder drehbeweglich am Kolben oder in einer Aussparung des Kolbens gelagert, Das zweite Kraftübertragungsmittel ist dabei insbesondere stabförmig ausgebildet und in dem ersten Kraftübertragungsmittel verschieblich gelagert ist.

Nachfolgend wird anhand von Zeichnungen die Erfindung näher beschreiben.

Es zeigen:
- Fig. 1:: Schematische Darstellung der erfindungsgemäßen Bremsanlage;
- Fig. 2:: Ausschnittsdarstellung des die Kupplung umfassenden Teils der erfindungsgemäßen Bremsanlage;
- Fig. 3:: Detaildarstellung der erfindungsgemäßen Kupplung.

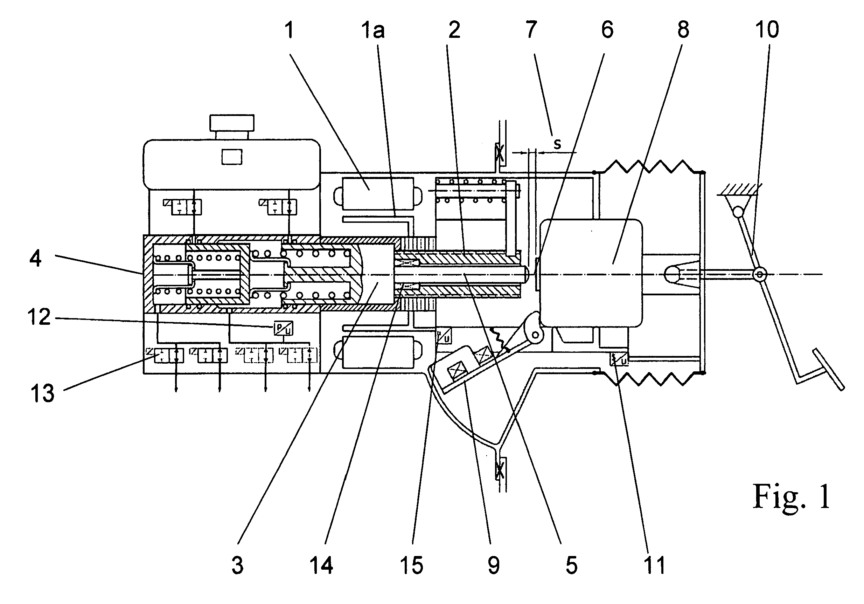

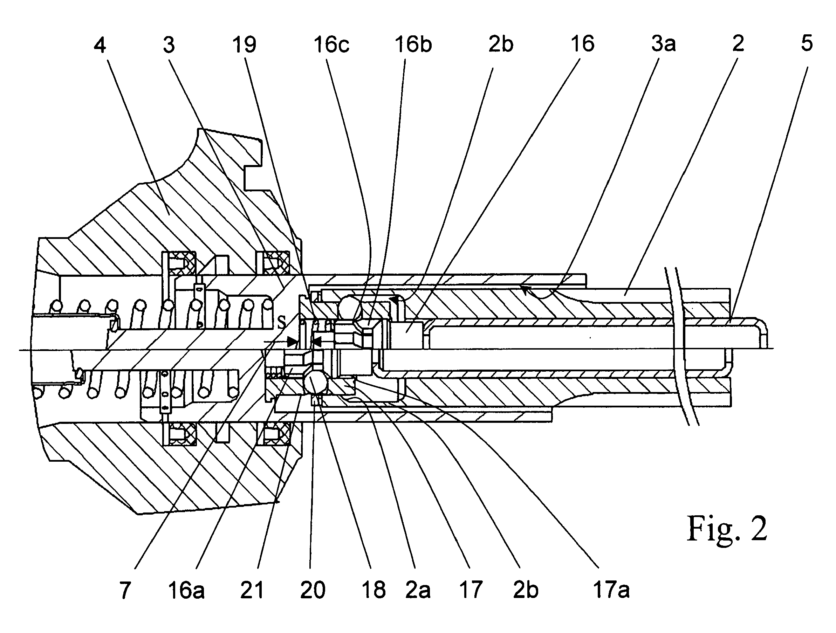

Die Fig. 1 zeigt einen integrierten Bremskraftverstärker mit einem Elektromotor 1 mit zugehörigem Rotor 1a, der die Spindelmutter 2 antreibt. Der Druckstangenkolben 3 ist verschieblich im Tandemhauptzylinder 4 angeordnet. Die Kupplung 14 wirkt zwischen Kolben 3 und der Spindel 2 nur dann, wenn der Antrieb 1 intakt ist. Die Kupplung selbst und die Verbindung zwischen Kolben 3, Spindel 2 und auslösendem bzw. die Kupplung im Störfall ausschaltendem Pedalstößel 5 ist in Figur 1 nur schematisch dargestellt und wird ausführlich anhand der Figur 2 erläutert.

Im Normalbetrieb wird die Betätigung des Bremspedals 10 über den Pedalwegsensor 11 erfasst und über den Motor 1 mit Spindelantrieb 5 der Druckstangenkolben 3 zum Druckaufbau und Druckabbau erzeugt. Die Funktion des Druckaufbaus und Druckabbaus ist bereits aus dem als Stand der Technik in dieser Anmeldung beschriebenen Dokumenten hinreichend bekannt. Es wird insofern vollumfänglich auf diese Dokumente Bezug genommen. Mittels der Kolben-Zylinder-Einheit 4 wird der Druckaufbau und Druckabbau mit den Ventilen 13 im Multiplexbetrieb für die einzelnen Radbremsen (nicht dargestellt) über den Elektromotor 1 erzeugt. Die Regelung erfolgt mittels des Sensors 15 im Vergleich mit dem Druckgeber 12. Die Pedalrückwirkung wird über der Wegsimulator 8 erzeugt. Damit der Pedalweg frei von Rückwirkung des DK-Kolben 3 ist, wird ein kleiner Leerweg s, wie er in jedem V-BKV auch verwendet wird, eingesetzt, um die kleine Anlaufverzögerung E-Motors zu berücksichtigen. Der Leerweg kann auch in der Kupplung 14 selbst zumindest teilweise realisiert werden.

Der Wegsimulator 8 ist im Gehäuse 8 zusammen mit einer in der nachveröffentlichten DE 10 2006 059 840 adaptiven Leerhubschaltung integriert. Wenn der Elektromotor 1 intakt ist, wird dieses bewegliche Gehäuse von der elektromagnetischen Wegsimulatorarretierung 9 in der Bewegung blockiert. Bei Ausfall des Antriebes 1 wirkt das Bremspedal 10 mit bekanntem Übertragungselement und Koppelelement 6 auf den Pedalstößel 5 und dieser wiederum über die Kupplung 14 auf den DK 3.

Die Spindel 2 wird auch als erstes Krartübertragungsmittel verstanden, über das vom Antrieb 1 eine Kraft auf den Kolben 3 sowohl zum Druckaufbau (der Kolben wird nach links verstellt), als auch zum Druckabbau, wobei dann dazu der Kolben nach links verstellt wird, übertragbar ist.

Der Pedalstößel wird auch als zweites Kraftübertragungsmittel verstanden, über das eine Kraft vom Bremspedal 10 auf den Kolben 3 übertragbar ist. Damit wirkt die Pedalbewegung direkt auf den Tandemhauptzylinder 4.

Durch den Wegsimulator 8 und den Leerweg s ist bei intaktem Motor die Pedalbewegung von der Kolbenbewegung entkoppelt.

Die Druckmodulation für ABS/ESP erfolgt durch entsprechende Motoransteuerung und Kolbenbewegung im sog. Multiplexbetrieb, bei dem die Regelventile 13 abwechselnd entsprechend dem notwendigen Druckniveau in Relation zum Regelalgorithmus zum Druckaufbau, -abbau und Halten geschaltet werden. Ober den Druckgeber kann das entsprechende Druckniveau erfasst werden.

Da die Kupplung nur im Notbetrieb geschaltet wird, welcher in der Regel selten auftritt, dessen Funktion für den Fehlerfall aber entscheidend ist, empfiehlt es sich die schaltbarkeit der Kupplung 14 zu diagnostizieren um ein mögliches Klemmen auszuschließen.

Eine Diagnose der Kupplung 14 kann unter anderem realisiert werden, indem z.B. bei Fahrzeugstart oder während Fahrzeugbeschleunigungsphasen der Elektromotor 1 die Spindel 2 aus der in Figur 2 dargestellten Ausgangsstellung in Richtung Fahrgastraum entgegengesetzt zur Pedalhubrichtung, d.h. nach rechts bewegt. Da das Pedal in Richtung Fahrer einen nicht dargestellten Anschlag hat, taucht der somit stillstehende Pedalstößel 5 in die Spindel 2 ein und verschiebt den Kupplungsstößel 16 relativ zur Spindel 2. Falls die Kupplung 14 einwandfrei funktioniert wird diese auf beschriebene Art geöffnet und der Motor kann die Spindel 2 weiter als den in der Kupplung vorhandenen Leerweg s verschieben. Der Spindelhub kann über den Winkelsensor 15 erfasst werden. Falls die Kupplung 14 klemmen sollte, fährt die Spindel nach dem Zurücklegen des Leerhubes s gegen Anschlag und der Motorstrom steigt entsprechend stark an.

Die Figur 2 zeigt die Ankupplung der Spindel 2 an den Kolben 3. Die Kupplung 14 ist in einer den Arbeitsräumen des Tandemhauptbremszylinders 4 abgewandten Stirnseite angeordneten, insbesondere topfförmigen Aussparung 3a des Druckstangenkolbens 3 integriert. Die Grundelemente des Hauptbremszylinders 4 werden, da allgemein bekannt, nicht beschrieben. Mit dem Kolben 3 ist die Kugelbuchse 17 formschlüssig verbunden, welche mehrere Kugeln 18 oder auch ggf. zylindrische Wälzkörper aufnimmt.

Innerhalb der Buchse 17 ist der Kupplungsstößel 16 gelagert, welcher mit dem Ende des Pedalstößels 5 verbunden ist. Der Kupplungsstößel 16 wird über eine Feder 19 auf einen Anschlag 17a der Kugelbuchse in eine erste Stellung zurück gestellt. In der oberen Bildhälfte ist die Kupplung 14 im eingekuppelten Zustand dargestellt. Die Spindel 2 wirkt zum Druckaufbau über Abgleichscheiben 20 direkt auf den Kolben 3. Beim Druckabbau wirkt die Spindel 2 über eine Kalotte 2a auf die Kugeln 18, deren radiale Bewegung nach innen durch entsprechende Kugellaufbahnen 16a im Kupplungsstößel 16 verhindert wird. Die Kugellaufbahnen 16a dienen somit als Sperrflächen, die ein Öffnen der Kupplung bei nicht durch das Bremspedal 10 druckbeaufschlagtem Pedalstößel 5 verhindern. Hierdurch ist im Normalbetrieb ein Formschluss zwischen Spindel 2 und Kolben 3 realisiert, der ein schnelles Zurückstellen des Kolbens 3 zum Druckabbau mittels des Elektromotors 1 ermöglicht. Im Normalbetrieb wird durch den beschriebenen Aufbau des Wegsimulators mit Arretierung 9 keine Kraft auf den Pedalstößel 5 übertragen.

Wenn, wie beschrieben, der Motorantrieb ausfällt, wird durch die Bewegung des Gehäuses 8 mit dem Bremspedal 10 der Pedalstößel 5 bewegt, der wiederum auf den Kupplungsstößel 16 wirkt. Nach Durchlaufen des Leerwegs 7 und Zusammendrücken der Feder 19 wirkt der Kupplungsstößel 16 auf den Kolben 3. Dieser nimmt die Kugelbuchse 17 mit, wodurch die Kugeln 18 über die Kalotte bzw, Führungskurve 2a nach innen in die Aussparung 16b des Kupplungsstößels 16 gedrückt werden. Hierdurch wird der Formschluss zwischen Kolben 3 und Spindel 2 aufgehoben und die Kupplung ist offen. Der Kolben 3 kann nunmehr unabhängig vom Antrieb über das Bremspedal 10 zum Druckaufbau verstellt werden. In der Kugelbuchse 16 sind Einstemmungen 21 eingearbeitet, damit die Kugeln bei der Montage und Demontage des Zylinders 4 nicht herausfallen.

Die Kontaktflächen zwischen Spindel 2 und Kugel 18 bzw. Kugel und Kupplungsstößel 16 sind kalottenförmig ausgeführt, sodass Linienberührung stattfindet und die Flächenpresaungen entsprechend reduziert werden.

Der Kupplungsstößel 16 ist zur Kugelbuchse 17 verdrehgesichert. Vorzugsweise sind hierfür die Kugellaufbahnen 16a so gestaltet, dass sie in die Aussparungen 16b hineinragen, bei der die Kupplung nicht mehr wirksam ist.

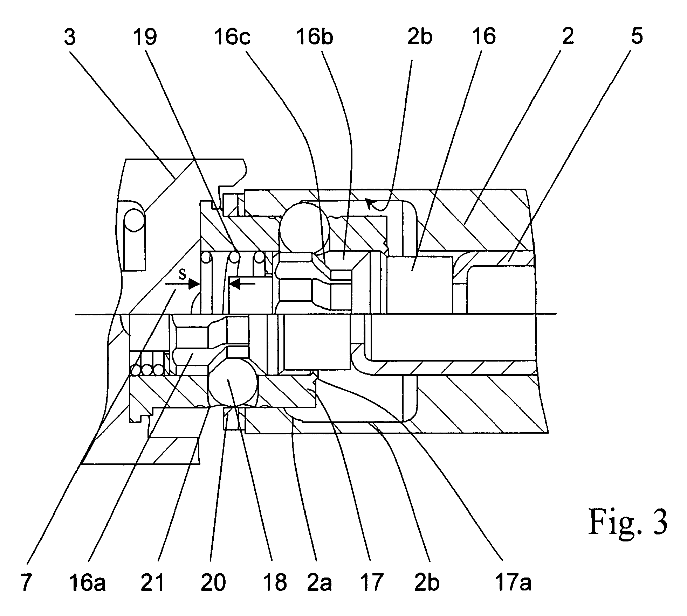

Die Figur 3 zeigt eine vergrößerte Ausschnittsdarstellung mit den für die Kupplung wesentlichen Teilen.

### Bezugezeichenliste

- 1: E-Motor
- 1a: Rotor mit Spindelmutter
- 2: Spindel
- 2a: Führungskurve bzw. Kalotte
- 2b: Aussparung
- 3: Drucksteuerkolben
- 3a: topfförmige Aussparung
- 4: Tandemhauptbremszylinder
- 5: Pedalstößel
- 6: Koppelelement zum Bremspedal
- 7: Leerweg
- 8: Wegsimulator mit adaptiver Leerhubschaltung
- 9: Wegsimulatorarretierung
- 10: Bremspedal
- 11: Pedalwegsensor
- 12: Druckgeber
- 13: Regelventile
- 14: Kupplung
- 15: Drehwinkelsensor
- 16: Kupplüngsstößel
- 16a: Kugellaufbahnen
- 16b: Aussparung
- 16c: Führungskurve
- 17: Kugelbuchse
- 17a: Anschlag in Kugelbuchse
- 18: Kugel
- 19: Rückstellfeder
- 20: Abgleichscheiben
- 21: Einstemmung

## Patentansprüche

1. Bremsanlage mit mindestens einer Kolben-Zylinder-Einheit (4) zur Erzeugung eines Drucks in mindestens einem Arbeitsraum, wobei der Arbeitsraum über mindestens eine Hydraulikleitung mit mindestens einer Radbremse in Verbindung ist, und dass die Bremsanlage zudem mindestens eine Antriebseinrichtung (1) und eine Betätigungseinrichtung (10), insbesondere in Form eines Bremspedals aufweist, und die Antriebseinrichtung (1) im Normalbetrieb auf den mindestens einen ersten Kolben (3) der Kolben-Zylinder-Einheit (4) zum Druckaufbau und Druckabbau mit einem ersten Kraftübertragungsmittel (2) wirkt und im Störungsfall die Betätigungseinrichtung (10) mechanisch über ein zweites Kraftübertragungsmittel (5,16) auf den Kolben (3) wirkt, **dadurch gakennzeichnet**, dass eine Kupplung (14) zwischen dem Kolben (3) und dem erstem Kraftübertragungsmittel (2) angeordnet ist, und bei einer Störung der Antriebseinrichtung (1) das Verstellen des zweiten Kraftübertragungsmittels (5, 16) mittels der Betätigungseinrichtung (10) die Kupplung (14) betätigt und damit die Verbindung zwischen dem ersten Kraftübertragungsmittel (2) und dem Kolben (3) trennt.

2. Bremsanlage nach Anspruch 1, **dadurch gekennzeichnet, dass** im Normalbetrieb das erste Kraftübertragungsmittel (2), das insbesondere eine Spindel ist, zur Ausübung einer auf den Kolben (3) in Richtung der Zylinderachse gerichteten Kraft, insbesondere formschlüssig, mit dem Kolben (3) in Verbindung ist.

3. Bremsanlage nach Anspruch 2, **dadurch gekennzeichnet, dass** das zweite Kraftübertragungsmittel (5, 16) einen im Normalbetrieb zwischen dem ersten Kraftübertragungsmittel (2) und dem Kolben (3) bestehenden Formschluss im Störungsfall, insbesondere durch Freigeben eines Arretierungsmittels (18), löst.

4. Bremsanlage nach Anspruch 1, **dadurch gekennzeichnet, dass** der Kolben (3) von der Antriebseinrichtung (1) im Zylinder (4) hin- und her bewegbar ist, wobei bei einer Störung der Antriebseinrichtung (1) eine durch die Betätigungseinrichtung (10) erzwungene Bewegung des zweiten Kraftübertragungsmittels (5, 16) relativ zum Kolben (3), insbesondere zum Kolben (3) hin, die Kupplung (14) öffnet und der Kolben (3) mittels der Betätigungseinrichtung (10) und des zweiten Kraftübertragungsmittels (5, 16) zum Druckaufbau unabhängig von der Antriebseinrichtung (1) verstellbar ist.

5. Bremsanlage nach einem der vorhergehenden Ansprüche, **dadurch gekennzeichnet, dass** das erste und/oder das zweite Kraftübertragungsmittel (2; 5, 16) verschieblich und/oder drehbeweglich am Kolben (3) oder in einer Aussparung (3a) des Kolbens (3) gelagert ist bzw. sind, und dass das zweite Kraftübertragungsmittel (5, 16) mittels einer Feder (19) in Richtung einer ersten Stellung druckbeaufschlagt ist und vom Betätigungsmittel (10) gegen die Federkraft in eine zweite Stellung relativ zum Kolben (3) verstellbar ist, wobei in der ersten Stellung das zweite Kraftübertragungsmittel (5, 16) die Verbindung zwischen erstem Kraftübertragungsmittel (2) und Kolben (3) sichert und in der zweiten Stellung oder einem Bereich zwischen der ersten und der zweiten Stellung die Verbindung löst bzw. freigibt, wobei insbesondere in der ersten Stellung mindestens ein am Kolben (3) gelagertes Kupplungselement (18), insbesondere in Form eines Bolzens, einer Kugel oder einer Walze, von dem zweiten Kraftübertragungsmittel (5, 16) zumindest teilweise in einer Aussparung (2b) des ersten Kraftübertragungsmittels (2) zur Bildung eines Formschlusses gehalten ist.

6. Bremsanlage nach Anspruch 5, **dadurch gekennzeichnet, dass** in der zweiten Stellung das mindestens eine Kupplungselement (18) in einer Aussparung (16b) des zweiten Kraftübertragungsmittels (16) einliegt und keinen Formschluss zwischen erstem Kraftübertragungsmittel (2) und Kolben (3) bildet, wobei insbesondere das mindestens eine Kupplungselement (18) radial verschieblich in einem am Kolben (3) angeformten oder befestigten Lagerteil bzw. Kugelbuchse (17) einliegt.

7. Bremsanlage nach Anspruch 6, **dadurch gekennzeichnet, dass** das erste und zweite Kraftübertragungsmittel (2; 16) jeweils Führungskurven (2a; 16c) aufweisen, die beim Bewegen des ersten oder zweiten Kraftübertragungsmittels (2; 16) relativ zum Lagerteil (17) das mindestens eine Kupplungselement (18) aus der eigenen Aussparung (2b; 16b) heraus in die Aussparung des jeweils anderen Kraftübertragungsmittels drücken.

8. Bremsanlage nach einem der vorhergehenden Ansprüche, **dadurch gekennzeichnet, dass** zwischen der Betätigungseinrichtung (10) und dem zweiten Kraftübertragungsmittel (5, 16) ein Wegsimulator (8) angeordnet ist, dessen Pedalhubbegrenzung insbesondere mittels einer Einrichtung (9) abschaltbar ist.

9. Bremsanlage nach einem der vorhergehenden Ansprüche, **dadurch gekennzeichnet, dass** zwischen dem jedem Arbeitsraum und der oder den zugehörigen Radbremsen 2/2-Wegeventile angeordnet sind.

10. Bremsanlage nach einem der vorhergehenden Ansprüche, **dadurch gekennzeichnet, dass** durch entsprechende Ansteuerung der Antriebseinrichtung die Bremsanlage die benötigte Bremskraftverstärkung und Druckmodulation für die ABS- und/oder ESP-Funktion einregelt.

11. Bremsanlage nach einem der vorhergehenden Ansprüche, **dadurch gekennzeichnet, dass** das zweite Kraftübertragungsmittel (5, 16), insbesondere ein damit verbundener Kupplungsstößel (16), zum Kolben (3) insbesondere ein damit verbundenerKugelbuchse (17), insbesondere mittels Formschluss verdrehgesichert ist.

12. Bremsanlage nach Anspruch 11, **dadurch gekennzeichnet, dass** die Verdrehsicherung durch mindestens eine Kugellaufbahn (16a) erfolgt, die sich in eine jeweils angrenzende Aussparung (16b) hinein erstreckt.

13. Verfahren zur Prüfung der Funktion der Bremsanlage nach einem der vorhergehenden Ansprüche, **dadurch gekennzeichnet, dass** durch Vergleichen des möglichen ersten und zweiten Kraftübertragungsmittel hubes durch Verstellen des mindestens einen ersten Kolbens (3) die Funktion der Kupplung (14) überprüft wird.

14. Verfahren nach Anspruch 13, **dadurch gekennzeichnet, dass** die Funktion der Kupplung (14) diagnostiziert wird, indem das erste Kraftübertragungsmittel (2) in der Ausgangsstellung durch die Antriebseinrichtung (1) gegen das stillstehende zweite Kraftübertragungsmittel (5, 16) bewegt wird, wodurch dieses einen mit dem zweiten Kraftübertragungsmittel (5) Verbundenen Kupplungsstößel (16) relativ zum ersten Kraftübertragungsmittel (2) betätigt und die Kupplung (14) somit geöffnet wird, wobei eine Funktionstüchtigkeit der Kupplung (14) ermittelt wird, wenn das erste Kraftübertragungsmittel (2) weiter als der Kupplungsweg s (7) bewegt werden kann.

## Claims

1. Brake system with at least one piston-cylinder unit (4) for producing a pressure in at least one working chamber, wherein the working chamber is connected to at least one wheel brake by means of at least one hydraulic line, and in that the brake system also has at least one drive device (1) and an actuating device (10), in particular in the form of a brake pedal, and the drive device (1), during normal operation, acts on the at least one first piston (3) of the piston-cylinder unit (4) to build up pressure and reduce pressure using a first force transmission means (2) and, in the event of a fault, the actuating device (10) acts mechanically by means of a second force transmission means (5, 16) on the piston (3), **characterised in that** a clutch (14) is arranged between the piston (3) and the first force transmission means (2), and, in the event of a fault of the drive device (1), the adjustment of the second force transmission means (5, 16) by means of the actuating device (10) actuates the clutch (14) and therefore severs the connection between the first force transmission means (2) and the piston (3).

2. Brake system according to claim 1, **characterised in that**, during normal operation, the first force transmission means (2), which is, in particular, a spindle, in order to exert a force directed onto the piston (3) in the direction of the cylinder axis, is connected, in particular positively, to the piston (3).

3. Brake system according to claim 2, **characterised in that** the second force transmission means (5, 16) releases a positive fit existing during normal operation between the first force transmission means (2) and the piston (3) in the event of a fault, in particular by freeing a locking means (18).

4. Brake system according to claim 1, **characterised in that** the piston (3) can be moved back and forth in the cylinder (4) by the drive device (1), wherein in the event of a fault of the drive device (1), a movement of the second force transmission means (5, 16) forced by the actuating device (10) relative to the piston (3), in particular toward the piston (3), opens the clutch (14) and the piston (3) can be adjusted by means of the actuating device (10) and the second force transmission means (5, 16) to build up pressure, independently of the drive device (1).

5. Brake system according to any one of the preceding claims, **characterised in that** the first and/or the second force transmission means (2; 5, 16) is or are displaceably and/or rotationally movably mounted on the piston (3) or in a recess (3a) of the piston (3), and **in that** the second force transmission means (5, 16) is pressure-loaded by means of a spring (19) in the direction of a first position and can be adjusted by the actuating means (10) against the spring force into a second position relative to the piston (3), wherein in the first position, the second force transmission means (5, 16) secures the connection between the first force transmission means (2) and piston (3) and, in the second position or a region between the first and the second position, releases or frees the connection, wherein, in particular in the first position, at least one coupling element (18) mounted on the piston (3), in particular in the form of a bolt, a ball or a roller, is held by the second force transmission means (5, 16), at least partially in a recess (2b) of the first force transmission means (2) to form a positive fit.

6. Brake system according to claim 5, **characterised in that**, in the second position, the at least one coupling element (18) is located in a recess (16b) of the second force transmission means (16) and does not form a positive fit between the first force transmission means (2) and piston (3), the at least one coupling element (18), in particular, being radially displaceably located in a bearing part or spherical bushing (17) formed or fastened on the piston (3).

7. Brake system according to claim 6, **characterised in that** the first and second force transmission means (2; 16) have guide curves (2a; 16c), in each case, which, when the first or second force transmission means (2; 16) moves relative to the bearing part (17), push the at least one coupling element (18) out of its own recess (2b; 16b) into the recess of the other respective force transmission means.

8. Brake system according to any one of the preceding claims, **characterised in that** a path simulator (8), the pedal lift limitation of which can be switched off, in particular, by means of a device (9), is arranged between the actuating device (10) and the second force transmission means (5, 16).

9. Brake system according to any one of the preceding claims, **characterised in that** 2/2-way valves are arranged between each working chamber and the associated wheel brake(s).

10. Brake system according to any one of the preceding claims, **characterised in that** the brake system regulates the required braking force boost and pressure modulation for the ABS and/or ESP function by corresponding activation of the drive device.

11. Brake system according to any one of the preceding claims, **characterised in that** the second force transmission means (5, 16), in particular a clutch plunger (16) connected thereto, in particular a spherical bushing (17) connected thereto, is secured against rotation, in particular by means of a positive fit to the piston (3).

12. Brake system according to claim 11, **characterised in that** the securing against rotation takes place by means of at least one ball track (16a), which extends into a respective adjacent recess (16b).

13. Method for testing the function of the brake system according to any one of the preceding claims, **characterised in that** the function of the clutch (14) is checked by comparing the possible first and second force transmission means stroke by adjusting the at least one first piston (3).

14. Method according to claim 13, **characterised in that** the function of the clutch (14) is diagnosed **in that** the first force transmission means (2), in the starting position, is moved by the drive device (1) against the stationery second force transmission means (5, 16), so that this actuates a clutch plunger (16) connected to the second force transmission means (5) relative to the first force transmission means (2) and the clutch (14) is therefore opened, a serviceability of the clutch (14) being determined if the first force transmission means (2) can be moved further than the clutch path s (7).

## Revendications

1. Installation de freinage comprenant au moins une unité à piston-et-cylindre (4) pour générer une pression dans au moins une chambre de travail, la chambre de travail étant reliée à au moins un frein de roue via au moins une conduite hydraulique, et l'installation de freinage comprenant en outre au moins un système d'entraînement (1) et un système d'actionnement (10), en particulier sous la forme d'une pédale de frein, et en fonctionnement normal le système d'entraînement (1) agit sur ledit au moins un premier piston (3) de l'unité à piston-et-cylindre (4) pour la montée en pression et la descente en pression avec un premier moyen de transmission de force (2) et, en cas de perturbation le système d'actionnement (10) agit par voie mécanique sur le piston (3) via un second moyen de transmission de force (5, 16), **caractérisée en ce qu'**un accouplement (14) est agencé entre le piston (3) et le premier moyen de transmission de force (2) et en cas de perturbation du système d'entraînement (1), le déplacement du second moyen de transmission de force (5, 16) au moyen du système d'actionnement (10) actionne l'accouplement (14) et sépare ainsi la liaison entre le premier moyen de transmission de force (2) et le piston (3).

2. Installation de freinage selon la revendication 1, **caractérisée en ce que**, en fonctionnement normal, le premier moyen de transmission de force (2), qui est en particulier une broche, est en liaison avec le piston (3), en particulier par coopération de formes, afin d'exercer sur le piston (3) une force orientée en direction de l'axe du cylindre.

3. Installation de freinage selon la revendication 2, **caractérisée en ce que** le second moyen de transmission de force (5, 16) dégage, en cas de perturbation, une coopération de formes existant en service normal entre le premier moyen de transmission de force (2) et le piston (3), en particulier par libération d'un moyen d'arrêt (18).

4. Installation de freinage selon la revendication 1, **caractérisée en ce que** le piston (3) est déplaçable en va-et-vient dans le cylindre (4) par le système d'entraînement (1) et, lors d'une perturbation du système d'entraînement (1), un mouvement, imposé par le système d'actionnement (10), du second moyen de transmission de force (5, 16) par rapport au piston (3), en particulier en direction du piston (3), ouvre l'accouplement (14), et le piston (3) est déplaçable au moyen du système d'actionnement (10) et du second moyen de transmission de force (5, 16), indépendamment du système d'entraînement (1), pour l'établissement de la pression.

5. Installation de freinage selon l'une des revendications précédentes, **caractérisée en ce que** le premier et/ou le second moyen de transmission de force (2 ; 5, 16) est/sont monté(s) mobile(s) en translation et/ou en rotation sur le piston (3) ou dans un évidement (3a) du piston (3), et **en ce que** le second moyen de transmission de force (5, 16) est sollicité en pression au moyen d'un ressort (19) en direction d'une première position et est déplacé par l'organe d'actionnement (10) par rapport au piston (3) à l'encontre de la force du ressort jusque dans une seconde position, de sorte que dans la première position le second moyen de transmission de force (5, 16) assure la liaison entre le premier moyen de transmission de force (2) et le piston (3) et dans la seconde position ou dans une plage entre la première et la seconde position, il libère ou dégage la liaison, de sorte que, en particulier dans la première position, au moins un élément d'accouplement (18), en particulier sous la forme d'un goujon, d'une bille ou d'un cylindre, monté sur le piston (3) est tenu par le second moyen de transmission de force (5, 16) au moins partiellement dans un évidement (2b) du second moyen de transmission de force (2) pour l'établissement d'une coopération de formes.

6. Installation de freinage selon la revendication 5,
**caractérisée en ce que**, dans la seconde position, ledit au moins un élément d'accouplement (18) est logé dans un évidement (16b) du second moyen de transmission de force (16) et n'établit aucune coopération de formes entre le premier moyen de transmission de force (2) et le piston (3), et en particulier ledit au moins un élément d'accouplement (18) est logé avec possibilité de déplacement radial dans une partie de palier ou une douille à bille (17) conformée ou fixée sur le piston (3).

7. Installation de freinage selon la revendication 6,
**caractérisée en ce que** le premier et le second moyen de transmission de force (2 ; 16) comprennent chacun des cames de guidage (2a ; 16c) qui, lors du déplacement du premier ou du second moyen de transmission de force (2 ; 16) par rapport à la partie de palier (17), poussent ledit au moins un élément d'accouplement (18) hors de son propre évidement (2b ; 16b) pour entrer dans l'évidement de l'autre moyen de transmission de force.

8. Installation de freinage selon l'une des revendications précédentes, **caractérisée en ce que**, entre le système d'actionnement (10) et le second moyen de transmission de force (5, 16) est agencé un simulateur de course (8), dont la fonction de limitation de la course de pédale peut être mise hors service, en particulier au moyen d'un dispositif (9).

9. Installation de freinage selon l'une des revendications précédentes, **caractérisée en ce que** des vannes à 2 voies et 2 positions sont agencées entre chaque chambre de travail et le ou les freins de roue associé(s).

10. Installation de freinage selon l'une des revendications précédentes, **caractérisée en ce que** par un pilotage correspondant du système d'entraînement l'installation de freinage assure la régulation de l'amplification de force de freinage nécessaire et la modulation de pression pour la fonction ABS et/ou la fonction ESP.

11. Installation de freinage selon l'une des revendications précédentes, **caractérisée en ce que** le second moyen de transmission de force (5, 16), en particulier un poussoir d'accouplement (16) relié à celui-ci, est bloqué à l'encontre d'une rotation, en particulier au moyen d'une coopération de formes, vis-à-vis du piston (3), en particulier d'une douille à bille (17) reliée à celui-ci.

12. Installation de freinage selon la revendication 11, **caractérisée en ce que** le blocage antirotation a lieu par au moins une voie de circulation de bille (16a) qui s'étend en pénétration dans un évidement (16b) respectivement adjacent.

13. Procédé pour contrôler le fonctionnement de l'installation de freinage selon l'une des revendications précédentes, **caractérisé en ce que**, par comparaison des courses possibles du premier et du second moyen de transmission de force par déplacement dudit au moins un premier piston (3), on contrôle le fonctionnement du couplage (14).

14. Procédé selon la revendication 13, **caractérisé en ce que** le fonctionnement du couplage (14) est diagnostiqué **en ce que** l'on déplace le premier moyen de transmission de force (2) dans la position de départ par le système d'entraînement (1) contre le second moyen de transmission de force (5, 16) stationnaire, en raison de quoi ledit poussoir d'accouplement (16) relié au second moyen de transmission de force (5) est actionné par rapport au premier moyen de transmission de force (2), et le couplage (14) est par conséquent ouvert, et l'on détermine une capacité de fonctionnement du couplage (14) quand le premier moyen de transmission de force (2) peut être déplacé plus loin que la course de couplage s (7).
